# EUROPEAN PATENT SPECIFICATION

(11) **EP 1 522 187 B1**
(45) Date of publication and mention of the grant of the patent: **31.03.2010**
(21) Application number: 03762840.1
(22) Date of filing: 23.06.2003
(51) Int. Cl.: H04N 5/57, H05B 37/02

(54) **METHOD OF AND SYSTEM FOR CONTROLLING AN AMBIENT LIGHT AND LIGHTING UNIT**
VERFAHREN UND SYSTEM ZUR STEUERUNG EINES UMGEBUNGSLICHTS UND BELEUCHTUNGSEINHEIT
PROCEDE ET SYSTEME DE COMMANDE DE LUMIERE AMBIANTE ET D'UNITE D'ECLAIRAGE

(30) Priority: 04.07.2002 EP 02077688
(43) Date of publication of application: 13.04.2005
(73) Proprietor: Koninklijke Philips Electronics N.V., 5621 BA Eindhoven (NL)
(72) Inventor: DIEDERIKS, Elmo, M., A., NL-5656 AA Eindhoven (NL); MEINDERS, Erwin, R., NL-5656 AA Eindhoven (NL); VAN LIER, Edwin, NL-5656 AA Eindhoven (NL); PETERS, Ralph, H., NL-5656 AA Eindhoven (NL); EGGEN, Josephus, H., NL-5656 AA Eindhoven (NL); VAN KUIJK, Jasper, I., NL-5656 AA Eindhoven (NL)
(74) Representative: Schmitz, Herman Jan Renier
(86) International application number: PCT/IB2003/002875
(87) International publication number: WO 2004/006570

(56) References cited:
- WO-A-02/068777
- US-A- 5 061 997
- US-A1- 2002 154 773
- ADAMSON K ET AL: "True multimedia presentations: A case study" DISPLAYS, ELSEVIER SCIENCE PUBLISHERS BV., BARKING, GB, vol. 17, no. 3-4, 1 May 1997 (1997-05-01), pages 131-141, XP004081498 ISSN: 0141-9382

## Description

The invention relates to a method of controlling an ambient light, the method comprising receiving a video signal by a receiver; presenting the video signal by a presentation device.

The invention further relates to a system for controlling an ambient light, the system comprising receiving means conceived to receive a video signal and translation means conceived to translate the video signal into a displayable signal by a presentation device.

The invention further relates to a lighting unit comprising a light armature and such a system.

Such a method and system are described by Adamson K et al: "True multimedia presentations: A case study" Displays, Elsevier Science Publishers BV., Barking, GB, vol. 17, no. 3-4, 1 May 1997 (1997-05-01), pages 131-141, XP004081498 ISSN: 0141-9382. This document discloses a system in which the producers create some kind of script to control the lighting as presented to provide "an environment sympathetic to the requirements of true multimedia". Further it discloses that the spot lights can be used to provide special effects complementing screen activity.

An embodiment of such a method and system is generally known from television stations that receive a television signal and display received television signal. Cable, satellite, etc can receive the television signal. Furthermore, digital video signal receivers like set-top boxes are also generally known. These set-top boxes process the received digital video signal like an MPEG signal into a signal such as RGB or YUV that can be displayed by a display unit like a CRT display, a plasma display or a LCD display. The display is normally situated in the home, for example in the living room. Here, other furniture like a light armature is also present. However, such a light armature is generally adjusted manually to emphasize the content of the video signal. For example, when a romantic movie is playing, the lights can be dimmed manually or when a horror movie is playing the colors of the lights are adjusted manually to comprise red and dark colors.

It is an object of the invention to provide a method according to the preamble that adjusts the ambient light to the content of a media signal in an improved way. To achieve this object the method is **characterized in that** the method further comprises analyzing the video signal by means of processing means; calculating, by means of the processing means, at least one predetermined feature of the analyzed video signal; setting a property of the ambient light based upon the feature calculated from the at lease one analyzed video signal. By analyzing a video signal, the ambient light can for example depend upon: the hue, the saturation, the brightness, the colors etc. of the video output. The ambient light can also depend upon a scene change within the video signal or the speed of scene changes. For example, the ambient light can be switched on and off with each scene change, thereby contributing to the experience of a person with the shown video output.

An embodiment of the method according to the invention is described in claim 2. By performing face recognition, the content of the video signal as an image is analyzed. Depending upon the recognized face, the ambient light can be adjusted. For example, when the face of a good character within a movie is recognized, the ambient light uses bright colors and when the face of a bad character within a movie is recognized, the ambient light uses dark colors. When both a good and bad character are recognized within a movie, part of the ambient light uses bright colors and an other part of the ambient light uses dark colors, thereby creating a mixture of dark and bright colors.

An embodiment of the method according to the invention is described in claim 3. By performing expression recognition, the setting of the ambient light can be improved further. For example, when a good character is in a bad mood, the ambient light can use dark colors or a combination of bright, for the good character, and dark colors, for the bad mood.

An embodiment of the method according to the invention is described in claim 4. By presenting the main data by a presentation device and setting the property of the ambient light that is in proximity of the presentation device, the ambient light enhances the experience of the presented main data more. The experience can be enhanced by, for example aligning the used colors of the ambient light with the average color used within the presented main data. The ambient light can, for example, also be aligned with the distribution of the used colors within the presented main data.

An embodiment of the method according to the invention is described in claim 5. By setting the property of the ambient light substantially synchronously with presenting the main data by the presentation device, the ambient light enhances the experience of the presented main data more. For example, in the case of the horror movie, the lights can become more dimmed when the tension within the movie increases and can become brighter again when the tension within the movie decreases again. The used colors of the ambient light can also change according to the changing content of the main data. For example, when commercials are shown during a movie, the ambient light can be turned to normal, white light conditions.

An embodiment of the method according to the invention is described in claim 6. By making the setting of the property of the ambient light configurable, it is possible to overrule the default behavior of the ambient light. For example, when an ambient light does only support a limited number of colors, the supported colors can be configured.

An embodiment of the method according to the invention is described in claim 7. By making the setting the property of the ambient light configurable by a user preference, it is possible to overrule the default behavior of the ambient light further. For example, when a user does not desire red ambient light, bright ambient light or a hectic light effect etc. , the user can configure this preference.

It is an object of the invention to provide a system according to the preamble that reacts upon the actual content of a media signal in an improved way. To achieve this object the system is characterized in that the system further comprises: processing means conceived to analyze the received video signal, to calculate at lease one predetermined feature of the analyzed video signal and to set a property of the ambient light based upon the at least one feature calculated from the analyzed video signal.

Embodiments of the system according to the invention are described in claims 9 and 10. These and other aspects of the invention will be apparent from and elucidated with reference to the embodiments described hereinafter as illustrated by the following Figures:
Figure 1 illustrates an embodiment of an ambient light environment ;
Figure 2 illustrates the main steps of an embodiment of the method according to the invention;
Figure 3 illustrates an embodiment of the system according to the invention in a schematic way.

Today, the experience we have while consuming media content at home is enhanced by means of bigger screens, image enhancement and more incredible sound. Examples of these are wide screen television, 100 Hz. Digital scan image enhancement, Dolby Surround Sound, Philips Incredible Sound etc. Moreover, film and Television show producers also try to influence the experience of their audience by all kinds of visual and audible effects, such as color, scene cuts, etc.

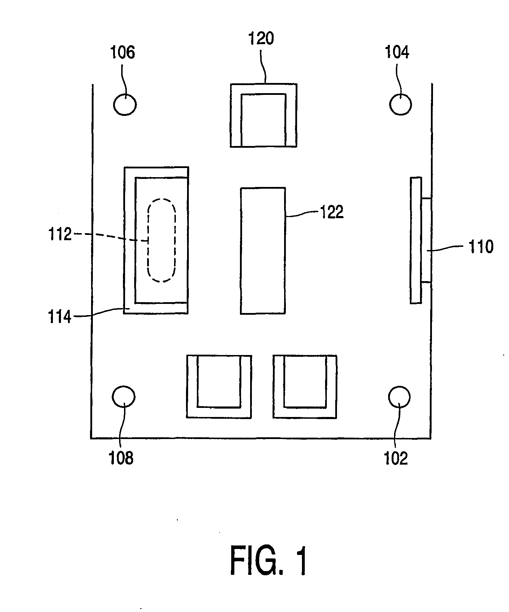

Figure 1 illustrates an embodiment of an ambient light environment. Here, 100 illustrates a living room in which light elements, 102,104, 106,108, and 112 are positioned. The light elements can comprise LED illumination cells of different colors like red, green and blue. Other colors and other light emitting resources, like halogen can also be used. The light element 112 is positioned underneath the couch 114. The television 110 receives and processes a television signal and the processed television is shown on its screen. The television 110 can be an analogue television signal receiver or a digital television signal receiver. The television signal can be received via a satellite dish, cable, storage device, internet etc. Furthermore, the television signal can in general be a video signal or an image as can be stored upon a VCR, CD, DVD, a Game machine a PC etc. The living room 100 contains also other furniture like chairs 116, 118, and 120 and a table 122. The positions of the furniture and the shown furniture is only meant as an example to illustrate the invention that allows realization and change of both ambiance and light effect in combination with video, games, audio, etc. For example, when a person has invited his friends over to watch a DVD, the light enhances the experience they have while watching the DVD. In this case, a Science Fiction movie is watched and an ambient dark-purple glow amplifies the spooky atmosphere of the first scenes. Within the movie, a thunderstorm starts and the ambient light flashes synchronous with the thunderstorm lights within the movie. While the thunderstorm rolls away, a green pulsating light from beneath the couch starts to indicate that the aliens are near the characters within the movie.

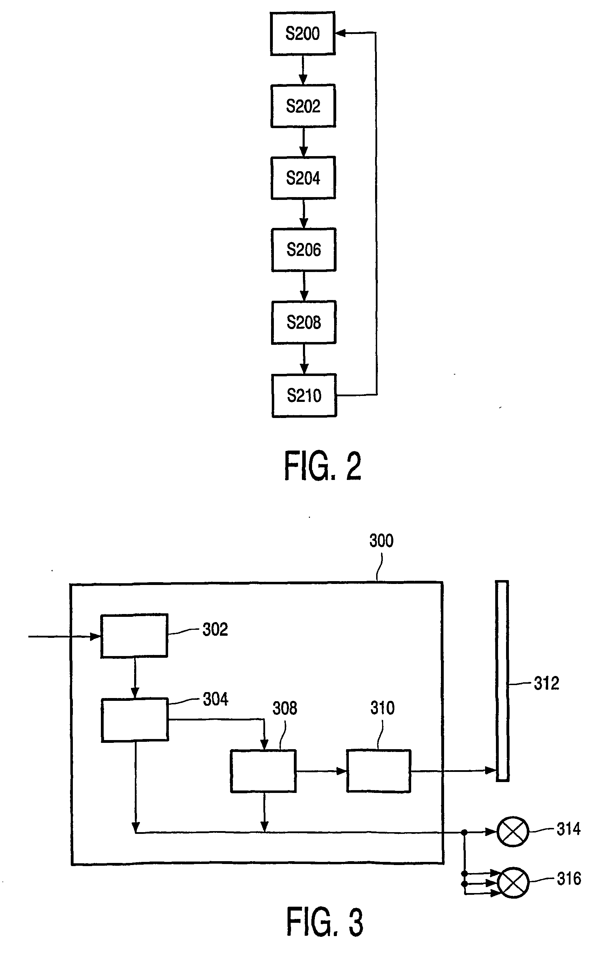

Figure 2 illustrates the main steps of an embodiment of the method according to the invention. Within step S200, by means of example, a television signal is received. The television signal is a digital television signal. The television signal can also be an analogue television signal or, instead of a television signal an image signal, like a JPEG image.

Within step S202, the television signal is analyzed. The television signal can be analyzed at various positions in the path of the video signal being presented to the user: inside the output device, for example a television set; or using a dedicated device on a scart that is running between a television set and a DVD player. Within the analysis, a signal is analyzed, like calculating the average color for the received video signal. The average color is calculated per image frame that is to be displayed by a displaying device like a television screen. Instead of calculating the average color, the most prominent color, the color at the corners of the image frame, etc. can be calculated too. As a consequence the calculated color can be used to set the light of the light elements to adopt this color to enhance the ambiance. For example, setting a green ambiance light in the surroundings of the display device in the case that a documentary about the rain forest is presented or to an ambient light that reflects a setting sun and extends the colors of the setting sun across the living room. In the case that the corners of the image frame are used to determine the color, the light elements that are at the corner of the display device can take over the color of the corners. Furthermore, the distribution of the color over the image can be used to determine the ambient light effect. For example, if the light is present in the image frame or in consecutive image frames such that the light seems to come either from the left, right or from behind the viewer, then the light elements subsequently at the left, right or the back should be more bright. Thus, the determined color setting can influence ambient light settings like hue, saturation, intensity, brightness, focus, diffuseness, direction, etc. of the light element. Optionally, these light element settings can be fine-tuned within the next steps.

Within step S204, the image frame is further analyzed for objects that can be recognized, for example, a ball, a person or a face. The presence of the objects in the video signal is used to further enhance the settings of the ambient light. In the case that a face is recognized, the facial expression can be analyzed too. This facial expression is then used to enhance the mood of the movie by ambient light settings. For example, when there are a lot of bright colors present within a scene, because it reflects a sunny day, but the characters playing within the scene are engaged in a fight, the ambient light does also reflect the fight by dark colors.

Within step S206, the configuration of the ambient light environment is taken into account to determine the light element settings. The configuration can comprise for example, the position of the light elements, the available colors, the available orientations of the light elements, etc. The position of the light elements can be used to determine the position of the light elements with respect to the display device 110. The light elements that are very close to the display device 110, should not be so bright to prevent that the displayed images cannot be viewed properly anymore. Whereas light elements that are too far away from the display device 110 should not be used, since their luminance does not contribute to the ambient light. The position can also be used for example to determine the light elements that should be involved in creating a desired lighting effect. The configuration information can further be used to determine the different intensities and colors of the different light elements in order to achieve an optimal effect of the combined light sources. For example, in the case of a specific program, like a health program or sports program that is being shown on the display device, a combination of colors can be used that influences health and mood like:

| | |
|---|---|
| good morning: | R 99% + G 99% + B 99% |
| relax: | R 20% + G 50% + B 80% |
| energy: | R 99% + G 40% + B 0% |
| working: | R 60% + G 50% + B 50% |
| idea: | R 40% + G 60% + B 0% |
| balance: | R 40% + G 0% + B 99% |
| relation: | R 40% + G 99% + B 50% |
| play: | R 99% + G 0% + B 99% |
| love: | R 99% + G 0% + B 0% |
| dream: | R 0% + G 0% + B 99% |

in which R stands for Red, G stands for Green and B stands for Blue. Another example is configuring the sensitivity for changes in the content. Many scene cuts might result in a hectic lighting effect. By lowering the sensitivity, the system only reacts to more major changes over a longer period of time. For example, in the case that a DVD or VCR movie is viewed, fast forwarding the scenes transits the lighting into a neutral light setting. Yet another example is configuring the balance, which in the case of multiple light sources would shift the lighting more to a specific light source. Also polarization and scene contrast are examples, where polarization reflects the ability of the system to enhance the ambiance more or less for predefined events, like emphasizing a goal of a favorite soccer club more than a goal of the non-favorite soccer club. And scene contrast reflects the ability of the system to change the ambient light in succeeding scenes, etc.

Within the next step S208, other preferences of light settings like user preferences are taken into account. These preferences can be used to effect the intensity of the amplification by the lighting effect of the mood and ambiance of the content. The preferences can intensify or weaken the lighting effect, for example to make a scary movie appear less frightening. The user preferences can also be used to determine if a user has already seen a movie. For example, the ambient light effects can intensify each time a user has watched a movie. Furthermore, the user preferences can be used to determine the desired lighting effects, like for example when a user does not want a thunderstorm to be emphasized, the lighting effects for a thunderstorm can be omitted.

Within the final step S210, the light settings are transmitted to the different light elements while synchronously the television signal is displayed by the display device. Generally, together with displaying the television signal, audio is played as well. Preferably, the lighting effect is synchronized both with the displayed television signal and the audio signal. Because the audio signal can be played with surround effects, as is generally known, the lighting effect is further preferably synchronized with the audio in terms of both space and time. For instance, a sound explosion behind the viewer at the right hand side, should be supported by a light effect emitted by the light elements that are positioned at the right hand side too.

With the described method amongst others, a following effect can be achieved: consider a science fiction movie in which an alien ship cast a shadow over a city. This is enhanced by extending this movement with ambient light. If the ship starts behind the viewer, the two light elements in the back dim first. Subsequently the sub light and the light elements in the front dim and finally the ship can be soon moving over the city on the television screen. If the ship starts in the screen and moves forward over the viewer, the two light elements in the front dim first, and subsequently the sub light and the light elements in the back dim. Finally the frontal light elements, the sub light and the back light elements brighten again so that it seems that the ship continues flying.

The order in the described embodiments of the method of the current invention is not mandatory, a person skilled in the art may change the order of steps or perform steps concurrently using threading models, multi-processor systems or multiple processes without departing from the concept as intended by the current invention.

Figure 3 illustrates an embodiment of the system according to the invention in a schematic way. The system 300 comprises memories 302, 304, 308, and 310. Memory 302 comprises computer readable code designed to receive and decode a digital video signal like an MPEG signal. Memory 304 comprises computer readable code designed to analyze the digital video signal for patterns and objects and to set the light settings of the light elements 314 and 316 depending thereupon as previously described. Light element 314 comprises one halogen light source and light element 316 is a LED light and comprises three light sources: Red, Green and Blue. Memory 308 comprises computer readable code designed to synchronize the received video signal with the light settings. Memory 310 comprises computer readable code designed to translate the video signal into a displayable signal like RGB for the display 312, like a CRT. The memories can communicate with each other through a software bus while using the processing power of a central processing unit, both of which are not shown. The system is described by means of example as a software system. However, dedicated hardware or combinations of software with hardware, like programmable hardware that is designed to perform the mentioned method steps is included too. Furthermore, a digital video signal is used as an example, while an analogue video signal can be used too.

It should be noted that the above-mentioned embodiments illustrate rather than limit the invention, and that those skilled in the art will be able to design many alternative embodiments without departing from the scope of the appended claims. For example, extending the lighting with more, specific purpose, light sources and offering algorithms to harmonize the output of these sources, like using a floodlight to enlighten a wall for the purpose of ambiance creation, spots that are positioned on various locations for the purpose of lighting effects in specific locations in the room, or a sub light positioned under a couch. In the claims, any reference signs placed between parentheses shall not be construed as limiting the claim. The word "comprising" does not exclude the presence of elements or steps other than those listed in a claim. The word "a" or "an" preceding a element does not exclude the presence of a plurality of such elements. The invention can be implemented by means of hardware comprising several distinct elements, and by means of a suitably programmed computer. In the system claims enumerating several means, several of these means can be embodied by one and the same item of computer readable software or hardware. The mere fact that certain measures are recited in mutually different dependent claims does not indicate that a combination of these measures cannot be used to advantage.

## Claims

1. Method of controlling an ambient light caused by one or more light elements, the method comprising:
- receiving (S200) a video signal by a receiver;
- presenting (S210) the video signal by a presentation device;
**characterized in that** the method further comprises
- analyzing (S202; S204) the video signal by means of processing means (304);
- calculating, by means of the processing means, at least one predetermined feature of the analyzed video signal, said at least one feature being included in the group consisting of: the average color, the most prominent color, the color at the corner and the distribution of color of one or more image frames in said video signal, and the presence of one or more objects in said video signal;
- adjusting the ambient light by setting (S210), by means of said processing means, a property of the or each light element based upon the feature calculated from the at least one analyzed video signal, said property being included in the group consisting of the hue, the saturation, the intensity, the brightness, the focus, the diffuseness and the direction of the or each light element.

2. Method of controlling an ambient light according to claim 1, wherein analyzing the video signal comprises face recognition.

3. Method of controlling an ambient light according to Claim 2, wherein analyzing the video signal comprises expression recognition.

4. Method of controlling an ambient light according to Claim 1, the method comprising setting the property of the ambient light that is in proximity of the presentation device.

5. Method of controlling an ambient light according to Claim 4, wherein setting the property of the ambient light is substantially synchronously with presenting the main data by the presentation device.

6. Method of controlling an ambient light according to Claim 1, wherein setting the property of the ambient light is configurable.

7. Method of controlling an ambient light according to Claim 1, wherein setting the property of the ambient light is configurable by a user preference.

8. System for controlling an ambient light caused by one or more light elements, the system comprising:
- receiving means (302) conceived to receive a video signal;
- translation means (310) conceived to translate the video signal into a displayable signal by a presentation device (312),
**characterized in that** the system further comprises:
- processing means (304) conceived to
analyze the received video signal;
calculate at lease one predetermined feature of the analyzed video signal, said at least one feature being included in the group consisting of: the average color, the most prominent color, the color at the corner and the distribution of color of one or more image frames in said video signal, and the presence of one or more objects in said video signal; and
adjust the ambient light by setting a property of the or each light element (314, 316) based upon the at least one feature calculated from the analyzed video signal, said property being included in the group consisting of: the hue, the saturation, the intensity, the brightness, the focus, the diffuseness and the direction of the or each light element.

9. System of controlling an ambient light according to Claim 8, wherein the processing means (304) are conceived to set the property of the ambient light that is in proximity of the presentation device (312).

10. System of controlling an ambient light according to Claim 9, the system comprising synchronization means (308) conceived to synchronize presenting the main data with setting the property of the ambient light.

11. Lighting unit comprising a light armature and the system according to Claim 8.

## Patentansprüche

1. Verfahren zur Steuerung eines von einem oder mehreren Lichtelementen erzeugten Umgebungslichts, wobei das Verfahren die folgenden Schritte umfasst:
- Empfangen (S200) eines Videosignals seitens eines Empfängers;
- Darstellen (S210) des Videosignals durch eine Darstellungseinrichtung;
**dadurch gekennzeichnet, dass** das Verfahren weiterhin die folgenden Schritte umfasst:
- Analysieren (S202; S204) des Videosignals mit Hilfe von Verarbeitungsmitteln (304);
- Berechnen von mindestens einem vorgegebenen Merkmal des analysierten Videosignals mit Hilfe der Verarbeitungsmittel, wobei das mindestens eine Merkmal in der Gruppe, bestehend aus: der Durchschnittsfarbe, der markantesten Farbe, der Farbe an dem Eck und der Farbverteilung von einem oder mehreren Bildrahmen in dem Videosignal sowie dem Vorhandensein von einem oder mehreren Objekten in dem Videosignal, enthalten ist;
- Einstellen des Umgebungslichts durch Einstellen (S210) einer Eigenschaft des bzw. jedes Lichtelements aufgrund des aus dem mindestens einen analysierten Videosignal berechneten Merkmals mit Hilfe der Verarbeitungsmittel, wobei die Eigenschaft in der Gruppe, bestehend aus; dem Farbton, der Sättigung, der Intensität, der Helligkeit, dem Fokus, der Unschärfe und der Richtung des bzw. jedes Lichtelements, enthalten ist.

2. Verfahren zur Steuerung eines Umgebungslichts nach Anspruch 1, wobei das Analysieren des Videosignals eine Gesichtserkennung umfasst.

3. Verfahren zur Steuerung eines Umgebungslichts nach Anspruch 2, wobei das Analysieren des Videosignals eine Ausdruckserkennung umfasst.

4. Verfahren zur Steuerung eines Umgebungslichts nach Anspruch 1, wobei das Verfahren die Einstellung der Eigenschaft des Umgebungslichts umfasst, welches sich in der Nähe der Darstellungseinrichtung befindet.

5. Verfahren zur Steuerung eines Umgebungslichts nach Anspruch 4, wobei die Einstellung der Eigenschaft des Umgebungslichts mit der Darstellung der Hauptdaten durch die Darstellungseinrichtung im Wesentlichen synchron verläuft.

6. Verfahren zur Steuerung eines Umgebungslichts nach Anspruch 1, wobei die Einstellung der Eigenschaft des Umgebungslichts konfigurierbar ist.

7. Verfahren zur Steuerung eines Umgebungslichts nach Anspruch 1, wobei die Einstellung der Eigenschaft des Umgebungslichts durch eine Anwenderpräferenz konfigurierbar ist.

8. System zur Steuerung eines von einer oder mehreren Lichtelementen erzeugten Umgebungslichts, wobei das System umfasst:
- Empfangsmittel (302), die zum Empfang eines Videosignals vorgesehen sind;
- Umwandlungsmittel (310), die zur Umwandlung des Videosignals in ein durch eine Darstellungseinrichtung (312) darstellbares Signal vorgesehen sind,
**dadurch gekennzeichnet, dass** das System weiterhin umfasst:
- Verarbeitungsmittel (304), die vorgesehen sind, um
das empfangene Videosignal zu analysieren;
mindestens ein vorgegebenes Merkmal des analysierten Videosignals zu berechnen, wobei das mindestens eine Merkmal in der Gruppe, bestehend aus: der Durchschnittsfarbe, der markantesten Farbe, der Farbe an dem Eck und der Farbverteilung von einem oder mehreren Bildrahmen in dem Videosignal sowie dem Vorhandensein von einem oder mehreren Objekten in dem Videosignal, enthalten ist; und
das Umgebungslicht durch Einstellen einer Eigenschaft des bzw. jedes Lichtelements (314, 316) aufgrund des aus dem mindestens einen analysierten Videosignals berechneten Merkmals einzustellen, wobei die Eigenschaft in der Gruppe, bestehend aus; dem Farbton, der Sättigung, der Intensität, der Helligkeit, dem Fokus, der Unschärfe und der Richtung des bzw. jedes Lichtelements, enthalten ist.

9. System zur Steuerung eines Umgebungslichts nach Anspruch 8, wobei die Verarbeitungsmittel (304) vorgesehen sind, um die Eigenschaft des Umgebungslichts, welches sich in der Nähe der Darstellungseinrichtung (312) befindet, einzustellen.

10. System zur Steuerung eines Umgebungslichts nach Anspruch 9, wobei das System Synchronisationsmittel (308) umfasst, die vorgesehen sind, um die Darstellung der Hauptdaten mit der Einstellung der Eigenschaft des Umgebungslichts zu synchronisieren.

11. Beleuchtungseinheit mit einer Lichtarmatur und dem System nach Anspruch 8.

## Revendications

1. Procédé de commande d'une lumière ambiante qui est provoquée par un ou plusieurs éléments de lumière, le procédé comprenant les étapes suivantes consistant à :
- recevoir (S200) un signal vidéo par un récepteur ;
- présenter (S210) le signal vidéo par un dispositif de présentation ;
**caractérisé en ce que** le procédé comprend en outre les étapes suivantes consistant à :
- analyser (S202 ; S204) le signal vidéo en utilisant des moyens de traitement (304) ;
- calculer, en utilisant les moyens de traitement, au moins une particularité caractéristique prédéterminée du signal vidéo analysé, ladite au moins une particularité caractéristique étant incluse dans le groupe comprenant : la couleur moyenne, la couleur la plus remarquable, la couleur au coin et la distribution de la couleur d'une ou de plusieurs trames d'image dans ledit signal vidéo, et la présence d'un ou de plusieurs objets dans ledit signal vidéo ;
- ajuster la lumière ambiante en réglant (S210), à l'aide desdits moyens de traitement, une propriété de l'élément de lumière ou de chaque élément de lumière sur la base de la particularité caractéristique qui est calculée à partir de l'au moins un signal vidéo analysé, ladite propriété étant incluse dans le groupe comprenant : la teinte, la saturation, l'intensité, la brillance, le foyer, le caractère diffus et la direction de l'élément ou de chaque élément de lumière.

2. Procédé de commande d'une lumière ambiante selon la revendication 1, dans lequel l'analyse du signal vidéo comprend une reconnaissance faciale.

3. Procédé de commande d'une lumière ambiante selon la revendication 2, dans lequel l'analyse du signal vidéo comprend une reconnaissance expressive.

4. Procédé de commande d'une lumière ambiante selon la revendication 1, le procédé comprenant le réglage de la propriété de la lumière ambiante qui se situe à proximité du dispositif de présentation.

5. Procédé de commande d'une lumière ambiante selon la revendication 4, dans lequel le réglage de la propriété de la lumière ambiante est sensiblement synchrone avec la présentation des données principales par le dispositif de présentation.

6. Procédé de commande d'une lumière ambiante selon la revendication 1, dans lequel le réglage de la propriété de la lumière ambiante est configurable.

7. Procédé de commande d'une lumière ambiante selon la revendication 1, dans lequel le réglage de la propriété de la lumière ambiante est configurable par une préférence d'utilisateur.

8. Système de commande d'une lumière ambiante qui est provoquée par un ou plusieurs éléments de lumière, le système comprenant :
- des moyens de réception (302) qui sont conçus de manière à recevoir un signal vidéo ;
- des moyens de traduction (310) qui sont conçus de manière à traduire le signal vidéo en un signal affichable par un dispositif de présentation (312),
**caractérisé en ce que** le système comprend en outre :
- des moyens de traitement (304) qui sont conçus de manière à
analyser le signal vidéo reçu ;
calculer au moins une particularité caractéristique prédéterminée du signal vidéo analysé, ladite au moins une particularité caractéristique étant incluse dans le groupe comprenant : la couleur moyenne, la couleur la plus remarquable, la couleur au coin et la distribution de la couleur d'une ou de plusieurs trames d'image dans ledit signal vidéo, et la présence d'un ou de plusieurs objets dans ledit signal vidéo ; et
ajuster la lumière ambiante en réglant une propriété de l'élément de lumière ou de chaque élément de lumière (314, 316) sur la base de l'au moins une particularité caractéristique qui est calculée à partir du signal vidéo analysé, ladite propriété étant incluse dans le groupe comprenant : la teinte, la saturation, l'intensité, la brillance, le foyer, le caractère diffus et la direction de l'élément de lumière ou de chaque élément de lumière.

9. Système de commande d'une lumière ambiante selon la revendication 8, dans lequel les moyens de traitement (304) sont conçus de manière à régler la propriété de la lumière ambiante qui se situe à proximité du dispositif de présentation (312).

10. Système de commande d'une lumière ambiante selon la revendication 9, le système comprenant des moyens de synchronisation (308) qui sont conçus de manière à synchroniser la présentation des données principales avec le réglage de la propriété de la lumière ambiante.

11. Unité d'éclairage comprenant une armature de lumière et le système selon la revendication 8.
